# FASCICULE DE BREVET EUROPEEN

(11) **EP 1 615 285 B1**
(45) Date de publication et mention de la délivrance du brevet: **03.12.2008**
(21) Numéro de dépôt: 04405424.5
(22) Date de dépôt: 06.07.2004
(51) Int. Cl.: H01M 8/10, H01M 8/02

(54) **Coeur de pile a combustible miniature**
Miniatur-Brennstoffzellekern
Miniature fuel cell core

(43) Date de publication de la demande: 11.01.2006
(73) Titulaire: CSEM Centre Suisse d'Electronique et de Microtechnique S.A. - Recherche et Développement, 2007 Neuchâtel (CH)
(72) Inventeur: Cardot, Francis, 2000 Neuchâtel (CH)
(74) Mandataire: GLN

(56) Documents cités:
- EP-A- 1 258 937
- US-A1- 2004 058 220
- US-A1- 2004 081 878
- US-A1- 2004 115 507

## Description

La présente invention se rapporte au domaine des piles à combustible. Elle concerne, plus particulièrement, un procédé de réalisation d'un coeur de pile miniature. L'invention concerne également un coeur de pile et une pile obtenus par ce procédé.

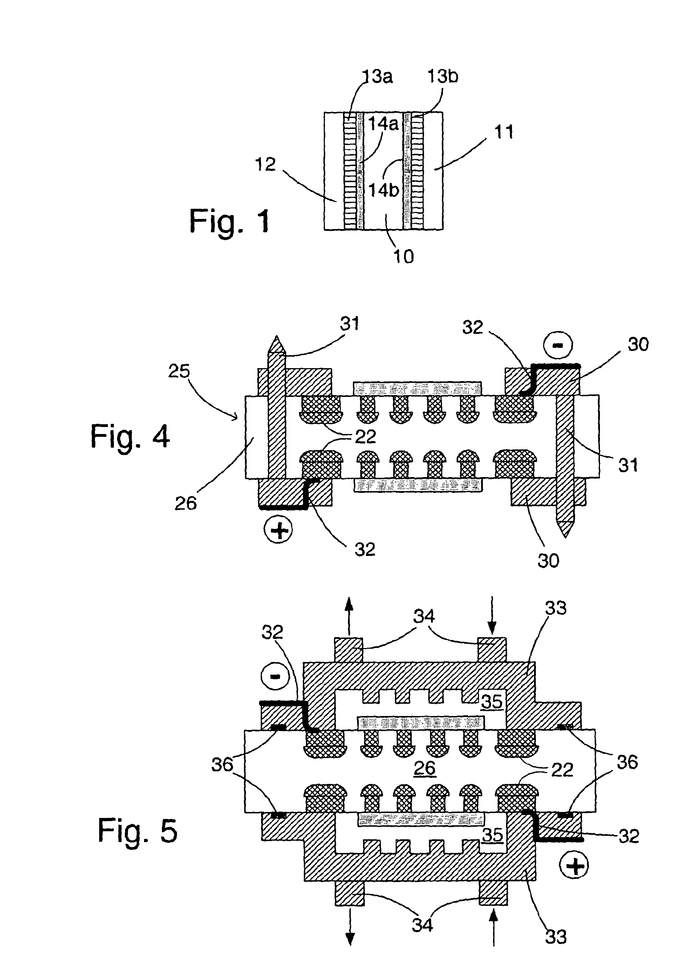

Une pile à combustible est décrite dans le document FR 03 07 967. Elle est constituée d'un grand nombre de cellules élémentaires disposées en série et comportant, chacune, un empilement comprenant, comme représenté schématiquement à la figure 1, une anode 13a et une cathode 13b séparées par une membrane électrolytique 10. L'empilement est disposé entre deux plaques collectrices de courant 11 et 12 à travers un diffuseur (14a et 14b).

La demande de brevet EP 04 405063.1 propose un procédé selon lequel le collecteur de courant est réalisé par dépôt galvanique sur un substrat, puis transféré sur la membrane de manière à y être retenu par incrustation ou collage.

La demande de brevet US 2004 081878 décrit une pile à combustible comportant des collecteurs incorporés dans l'électrolyte.

La présente invention a pour but de fournir un procédé permettant de miniaturiser davantage le coeur d'une pile à combustible, d'en améliorer les performances et d'en réduire les coûts de fabrication.

De façon plus précise, l'invention concerne un procédé de réalisation d'un coeur de pile à combustible, caractérisé en ce qu'il comporte la suite des opérations suivantes :
- se doter de deux sous-ensembles identiques formés d'un substrat et d'un collecteur de courant disposé sur lui de manière détachable,
- déposer une membrane ionique polymérisable, à l'état liquide ou pâteux, sur au moins l'un desdits sous-ensembles de manière à recouvrir complètement son collecteur,
- appliquer les deux sous-ensembles obtenus l'un contre de manière à obtenir un ensemble comprenant une membrane solidifiée et les deux collecteurs incorporés, face à face, dans cette membrane, et
- détacher les deux substrats des collecteurs.

Les collecteurs peuvent être soit formés in situ sur leur substrat soit formés séparément puis reportés sur leur substrat.

Selon un premier mode de mise en oeuvre de l'invention, une membrane est déposée sur les deux sous-ensembles.

Selon un deuxième mode de mise en oeuvre de l'invention, une membrane est déposée sur un seul des deux sous-ensembles.

L'invention concerne également un coeur de pile à combustible réalisé par le procédé ci-dessus et caractérisé en ce que l'ensemble obtenu est inséré entre deux cadres rigides, à l'instar d'une diapositive.

L'invention concerne, enfin, une pile à combustible dont le coeur est réalisé par le procédé ci-dessus et caractérisée en ce que l'ensemble obtenu est inséré entre deux capots rigides munis d'embouts de raccordement et ménageant, de part et d'autre de l'ensemble, des espaces pour les réactifs nécessaires.

De manière avantageuse, les cadres et les capots servent également de supports pour des contacts électriques reliant les deux collecteurs à l'extérieur.

D'autres caractéristiques de l'invention apparaîtront plus loin à la lecture de la description qui suit, faite en regard du dessin annexé dans lequel :
- les figures 2 et 3 illustrent deux manières différentes de mettre en oeuvre le procédé,
- la figure 4 montre l'intégration du coeur de pile entre deux cadres, et
- la figure 5 montre l'intégration du coeur de pile entre deux capots.

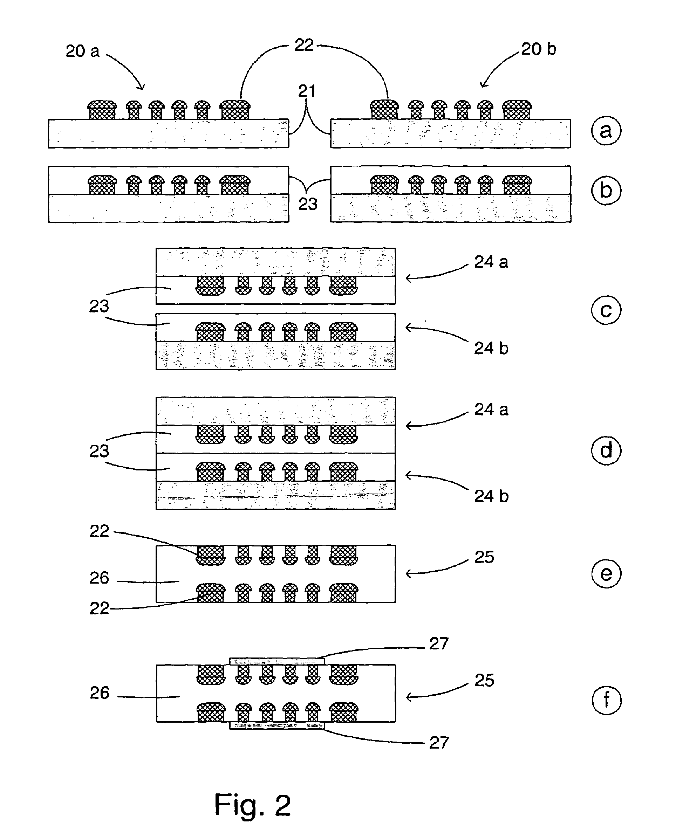

On se référera tout d'abord à la figure 2 qui schématise les principales opérations du premier mode de mise en oeuvre de l'invention.

### Figure 2a

Au départ du procédé, on se dote de deux sous-ensembles identiques 20a-20b formés chacun d'un substrat 21 et d'un collecteur de courant métallique en forme de grille 22 déposé sur le substrat. Le collecteur a, en coupe, un profil de champignon ou de harpon et, typiquement, une épaisseur de 5 à 10 µm. La face du substrat qui reçoit le collecteur est telle que celui-ci peut en être détaché par action mécanique, chimique ou thermique.

Chaque collecteur 22 est avantageusement réalisé, in situ, par dépôt galvanique d'or à l'aide d'un masque formé sur le substrat, selon le procédé décrit en détail dans le document EP 04 405063.1 déjà mentionné.

En variante, les collecteurs 22 pourraient aussi être réalisés séparément puis reportés sur les substrats et fixés à eux par collage.

### Figure 2b

Une demi-membrane ionique polymérisable 23, de type Nafion® (cationique) ou de type ADP-Morgane® (anionique), est déposée, à l'état liquide ou pâteux, sur chaque sous-ensemble 20a-20b de manière à recouvrir complètement les collecteurs 22. Typiquement, cette couche est étalée par une technique connue sous le nom de " spin coating " et a une épaisseur de 10 à 20 µm.

### Figure 2c

Après une pré-polymérisation des demi-membranes 23, opération qui n'est pas indispensable, les sous-ensembles résultant 24a-24b sont respectivement fixés sur les plateaux de travail d'une machine, dite de " flip chip bonding ", non représentée au dessin et bien connue de l'homme de métier, les deux demi- membranes 23 se faisant face.

### Figure 2d

L'alignement et la planéité des deux sous-ensembles 24a-24b ayant été ajustés, ils sont appliqués l'un contre l'autre par la machine, sous une pression, à une température et pour une durée telles que les demi-membranes 23 se soudent l'une à l'autre et se solidifient par polymérisation.

### Figure 2e

Lorsque les deux plateaux de la machine sont éloignés, il reste à détacher les collecteurs 22 de leurs substrats respectifs 21. Dans le cas de collecteurs formés galvaniquement, la séparation se fait par une simple action mécanique. Si les collecteurs ont été rapportés et fixés par collage, la séparation se fait par une action chimique et/ou thermique.

Le résultat est un ensemble 25 comprenant une membrane solidifiée 26 et les deux collecteurs 22 incorporés, face à face, dans la membrane. Typiquement, l'ensemble a une épaisseur de 20 à 40 µm.

### Figure 2f

Les deux faces de l'ensemble 25 sont, au droit des collecteurs 22, recouvertes d'une couche de catalyseur 27 comportant essentiellement des éléments catalyseurs proprement dits, tels que du platine et du ruthénium, et des éléments conducteurs électriques et ioniques, tels que du carbone et le même matériau que celui constituant la membrane 26.

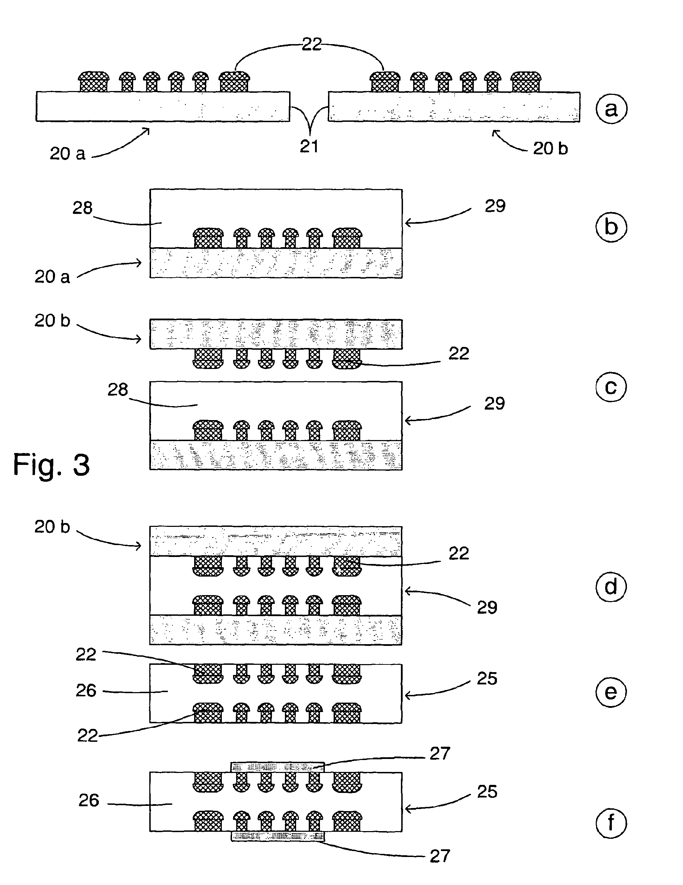

Une variante du procédé est illustrée à la figure 3 sur laquelle les éléments identiques à ceux de la figure 2 portent les mêmes numéros de référence.

### Figure 3a

La première opération est identique à celle de la figure 2a.

### Figure 3b

Une membrane ionique polymérisable 28, de même type que les demi-membranes 23, mais d'épaisseur double est déposée, à l'état liquide ou pâteux, sur l'ensemble 20a pour constituer le sous-ensemble 29.

### Figure 3c

Après une pré-polymérisation de la membrane 28, opération qui n'est pas indispensable, les ensembles 20b et 29 sont respectivement fixés sur les plateaux de travail d'une machine de " flip chip bonding", la membrane 28 faisant face au collecteur 22 de l'ensemble 20b.

### Figure 3d

L'alignement et la planéité des ensembles 20b et 29 ayant été ajustés, ils sont appliqués l'un contre l'autre par la machine, sous une pression, à une température et pour une durée telles que le collecteur 22 de l'ensemble 20b s'incruste dans la membrane qui se solidifie par polymérisation.

### Figure 3e

L'opération est identique à celle de la figure 2e.

### Figure 3f

L'opération est identique à celle de la figure 2f.

Quel que soit le procédé utilisé, la structure obtenue souffre du fait que la mince membrane 26 risque de se déformer sous l'action de l'humidité, ce qui pose un problème lorsqu'il s'agit de manipuler l'ensemble pour l'incorporer dans une pile à combustible.

Selon l'invention, comme illustré par la figure 4, le problème ci-dessus est résolu en insérant l'ensemble 25 entre deux cadres rigides 30, avantageusement réalisés en PVC et fixés l'un à l'autre à l'aide de pointes 31 traversant la membrane 26. On remarquera que ces cadres servent également de supports pour des contacts électriques 32 reliant les deux collecteurs 22 à l'extérieur.

Ce " packaging " de l'ensemble, à l'instar d'une diapositive, permet de stabiliser la forme de la membrane et facilite sa manipulation.

On se référera, pour terminer, à la figure 5 montrant que les simples cadres 30 de la figure 4 sont remplacés par des capots rigides 33, avantageusement réalisés en PVC et également fixés l'un à l'autre par des pointes (non représentées). Ces capots sont munis d'embouts de raccordement 34 qui assurent aussi la rigidification de l'ensemble mais ménagent en plus, de part et d'autre des catalyseurs 27, des espaces 35 pour les réactifs nécessaires. Des joints 36 assurent l'étanchéité de ces espaces. La structure de la figure 5 constitue ainsi une pile à combustible complète.

La présente description a été faite en se référant à des ensembles isolés. Dans la pratique, comme cela se fait dans le domaine de la microélectronique, plusieurs ensembles dotés de leurs cadres ou de leurs capots, sont fabriqués en formant une membrane unique sur une matrice de collecteurs. Les ensembles sont finalement séparés en découpant la membrane autour des cadres ou des capots.

Il est ainsi proposé de réaliser un coeur de pile à combustible miniature qui, grâce à l'intégration des collecteurs de courant dans la membrane, améliore fortement le contact membrane-collecteurs-catalyseurs et, grâce à l'utilisation de cadres, permet d'éviter sans coûts excessifs supplémentaires, les déformations des membranes. L'invention permet aussi, grâce à l'utilisation de capots, de fournir une pile a combustible miniature prête à fonctionner. On notera enfin que la forme en harpon des collecteurs de courant renforce nettement leur tenue dans la membrane.

## Revendications

1. Procédé de réalisation d'un coeur de pile à combustible, **caractérisé en ce qu'**il comporte la suite des opérations suivantes :
- se doter de deux sous-ensembles identiques (20a-20b) formés d'un substrat (21) et d'un collecteur de courant (22) disposé sur lui de manière détachable,
- déposer une membrane ionique polymérisable (23, 28), à l'état liquide ou pâteux, sur au moins l'un desdits sous-ensembles de manière à recouvrir complètement son collecteur,
- appliquer les deux sous-ensembles obtenus l'un contre de manière à obtenir un ensemble (25) comprenant une membrane solidifiée (26) et les deux collecteurs (22) incorporés, face à face, dans cette membrane, et
- détacher les deux substrats (21) des collecteurs.

2. Procédé selon la revendication 1, **caractérisé en ce que** lesdits collecteurs (22) sont formés in situ sur leur substrat.

3. Procédé selon la revendication 1, **caractérisé en ce que** lesdits collecteurs (22) sont formés séparément puis reportés sur leur substrat.

4. Procédé selon l'une des revendications 1 à 3, **caractérisé en ce qu'**une membrane (23) est déposée sur les deux sous-ensembles.

5. Procédé selon l'une des revendications 1 à 3, **caractérisé en ce qu'**une membrane (28) est déposée sur un seul des deux sous-ensembles.

6. Procédé selon l'une des revendications 1 à 5, **caractérisé en ce qu'**il comporte, après le détachement des substrats, l'opération de dépôt d'une couche de catalyseur (27) sur les collecteurs.

7. Coeur de pile à combustible réalisé par le procédé selon l'une des revendications 1 à 6, **caractérisé en ce que** ledit ensemble (25) est inséré entre deux cadres rigides (30), à l'instar d'une diapositive.

8. Coeur de pile à combustible selon la revendication 7, **caractérisé en ce que** les cadres (30) servent également de supports pour des contacts électriques (32) reliant les deux collecteurs à l'extérieur.

9. Coeur de pile à combustible selon l'une des revendications 7 et 8, **caractérisé en ce que** les collecteurs (22) ont un profil de champignon ou de harpon.

10. Pile à combustible dont le coeur est réalisé par le procédé selon l'une des revendications 1 à 6, **caractérisée en ce que** ledit ensemble (25) est inséré entre deux capots rigides (33) munis d'embouts de raccordement (34) et ménageant, de part et d'autre de l'ensemble, des espaces (35) pour les réactifs nécessaires.

11. Pile à combustible selon la revendication 10, **caractérisée en ce que** les capots (33) servent également de supports pour des contacts électriques (32) reliant les deux collecteurs à l'extérieur.

## Claims

1. A method for producing a fuel cell core, **characterized in that** it comprises the following operations in sequence:
- providing two identical subassemblies (20a-20b) formed of a substrate (21) and a current collector (22) positioned on it in a detachable manner,
- depositing a polymerizable ionic membrane (23, 28) in the liquid or pasty state on at least one of said subassemblies so as to cover its collector completely,
- applying the two subassemblies obtained one against so as to obtain an assembly (25) comprising a solidified membrane (26) and the two collectors (22) incorporated, face to face, in this membrane, and
- detaching the two substrates (21) from the collectors.

2. The method as claimed in claim 1, **characterized in that** said collectors (22) are formed in situ on their substrate.

3. The method as claimed in claim 1, **characterized in that** said collectors (22) are formed separately and then added to their substrate.

4. The method as claimed in one of claims 1 to 3, **characterized in that** a membrane (23) is deposited on the two subassemblies.

5. The method as claimed in one of claims 1 to 3, **characterized in that** a membrane (28) is deposited on only one of the two subassemblies.

6. The method as claimed in one of claims 1 to 5, **characterized in that** it includes, after the substrates are detached, the operation of depositing a catalyst layer (27) on the collectors.

7. A fuel cell core made by the method as claimed in one of claims 1 to 6, **characterized in that** said assembly (25) is inserted between two rigid frames (30), in the manner of a transparency.

8. The fuel cell core as claimed in claim 7, **characterized in that** the frames (30) also serve as supports for electrical contacts (32) connecting the two collectors to the outside.

9. The fuel cell core as claimed in either of claims 7 or 8, **characterized in that** the collectors (22) have a mushroom or harpoon profile.

10. A fuel cell of which the core is produced by means of the method as claimed in one of claims 1 to 6, **characterized in that** said assembly (25) is inserted between two rigid covers (33) provided with connecting end pieces (34) and providing, either side of the assembly, spaces (35) for the necessary reagents.

11. The fuel cell as claimed in claim 10, **characterized in that** the covers (33) also serve as supports for electrical contacts (32) connecting the two collectors to the outside.

## Patentansprüche

1. Verfahren zur Herstellung eines Brennstoffzellenkerns, **dadurch gekennzeichnet, dass** es die nachstehende Folge von Vorgängen umfasst:
- Bereitstellen von zwei identischen Teilsystemen (20a, 20b), die aus einem Substrat (21) und einem Stromkollektor (22), der darauf abnehmbar angeordnet ist, gebildet werden,
- Absetzen einer polymerisierbaren ionischen Membran (23, 28) in flüssigem oder pastenförmigem Zustand auf mindestens einem der Teilsysteme, um seinen Kollektor vollständig abzudecken,
- Aneinanderdrücken der beiden erhaltenen Teilsysteme, um eine Einheit (25) zu erhalten, die eine erstarrte Membran (26) und die beiden, sich in dieser Membran gegenüberliegend integrierten Kollektoren (22) umfasst, und
- Abnehmen der beiden Substrate (21) von den Kollektoren.

2. Verfahren nach Anspruch 1, **dadurch gekennzeichnet, dass** die Kollektoren (22) an Ort und Stelle auf ihrem Substrat gebildet werden.

3. Verfahren nach Anspruch 1, **dadurch gekennzeichnet, dass** die Kollektoren (22) getrennt gebildet und dann auf ihr Substrat übertragen werden.

4. Verfahren nach einem der Ansprüche 1 bis 3, **dadurch gekennzeichnet, dass** eine Membran (23) auf die beiden Teilsysteme abgesetzt wird.

5. Verfahren nach einem der Ansprüche 1 bis 3, **dadurch gekennzeichnet, dass** eine Membran (28) nur auf einem der beiden Teilsysteme abgesetzt wird.

6. Verfahren nach einem der Ansprüche 1 bis 5, **dadurch gekennzeichnet, dass** es nach dem Abnehmen der Substrate den Vorgang des Absetzens einer Katalysatorschicht (27) auf die Kollektoren umfasst.

7. Brennstoffzellenkern, der gemäß dem Verfahren nach einem der Ansprüche 1 bis 6 hergestellt wird, **dadurch gekennzeichnet, dass** die Einheit (25) zwischen zwei stabile Rahmen (30), etwa wie ein Dia, eingeschoben wird.

8. Brennstoffzellenkern nach Anspruch 7, **dadurch gekennzeichnet, dass** die Rahmen (30) auch als Träger für elektrische Kontakte (32) dienen, welche die beiden Kollektoren mit der Außenseite verbinden.

9. Brennstoffzellenkern nach einem der Ansprüche 7 und 8, **dadurch gekennzeichnet, dass** die Kollektoren (22) ein pilzförmiges oder hakenartiges Profil aufweisen.

10. Brennstoffzelle, deren Kern gemäß dem Verfahren nach einem der Ansprüche 1 bis 6 hergestellt wird, **dadurch gekennzeichnet, dass** die Einheit (25) zwischen zwei stabile Abdeckungen (33) eingeschoben wird, die mit Anschlussstücken (34) versehen sind und auf beiden Seiten der Einheit Räume (35) für die notwendigen Reaktionsmittel einrichten.

11. Brennstoffzelle nach Anspruch 10, **dadurch gekennzeichnet, dass** die Abdeckungen (33) auch als Träger für elektrische Kontakte (32) dienen, welche die beiden Kollektoren mit der Außenseite verbinden.
